# EUROPÄISCHE PATENTSCHRIFT

(11) **EP 2 760 633 B1**
(45) Veröffentlichungstag und Bekanntmachung des Hinweises auf die Patenterteilung: **29.04.2020**
(21) Anmeldenummer: 12770446.8
(22) Anmeldetag: 26.09.2012
(51) Int. Cl.: B24B 1/00, B24B 5/04, B24B 5/42, B24B 19/12, B24B 49/02, B23Q 17/20, G01B 21/12, B23B 25/06, B24B 49/03

(54) **WERKZEUGMASCHINE UND VERFAHREN ZUR VERMESSUNG EINES WERKSTÜCKS**
MACHINE TOOL AND METHOD FOR MEASURING A WORKPIECE
MACHINE-OUTIL ET PROCÉDÉ POUR MESURER UNE PIÈCE

(30) Priorität: 27.09.2011 DE 102011115254
(43) Veröffentlichungstag der Anmeldung: 06.08.2014
(73) Patentinhaber: Fritz Studer AG, 3612 Steffisburg (CH)
(72) Erfinder: GAEGAUF, Fred, 6332 Hagendorn (CH)
(74) Vertreter: Witte, Weller & Partner Patentanwälte mbB
(86) Internationale Anmeldenummer: PCT/EP2012/068947
(87) Internationale Veröffentlichungsnummer: WO 2013/045484

(56) Entgegenhaltungen:
- EP-A1- 2 298 497
- WO-A1-97/13614
- DE-A1- 10 030 087
- DE-A1- 19 616 353
- GB-A- 2 163 981

## Beschreibung

Die Erfindung betrifft eine Werkzeugmaschine, insbesondere eine Schleifmaschine, mit einer Werkstückaufnahme, einer Werkzeugeinheit, einer Messeinrichtung und mit einer Steuereinrichtung, die mit der Messeinrichtung und der Werkzeugeinheit koppelbar ist. Die Erfindung betrifft ferner ein Verfahren zur Vermessung eines Werkstücks, insbesondere eines Werkstückdurchmessers, in einer Werkzeugmaschine, insbesondere einer Schleifmaschine.

Werkzeugmaschinen, insbesondere Schleifmaschinen, sind im Stand der Technik bekannt. So können beispielsweise Rundschleifmaschinen rotationssymmetrische Werkzeuge, etwa Schleifscheiben, aufweisen, die in geeigneter Weise mit einem Werkstück zur Materialabtragung zusammenwirken können. Rundschleifmaschinen können beispielsweise zum Außenrundschleifen, Innenrundschleifen oder zum Einstechschleifen bzw. Schrägeinstechschleifen ausgebildet sein. Neben Schleifscheiben können beim Rundschleifen grundsätzlich auch Schleifbänder zur Anwendung kommen. Neben rotationssymmetrischen Flächen können etwa auch exzentrisch ausgebildete Werkstückflächen bearbeitet werden, wenn die Werkstückaufnahme und die Werkzeugeinheit in geeigneter Weise antreibbar und relativ zueinander verfahrbar sind. Auf diese Weise können etwa Nockenwellen, Kurbelwellen oder ähnliche Werkstücke mit exzentrischen Geometrien bearbeitet bzw. geschliffen werden.

Ein zu bearbeitendes Werkstück kann etwa zwischen zwei Spitzen einer Werkstückaufnahme oder aber einseitig in einer Werkstückaufnahme aufgenommen sein. Daneben ist das sogenannte spitzenlose Schleifen bekannt, bei dem das Werkstück in der Schleifmaschine nicht zwischen Spitzen aufgenommen ist, sondern etwa über Auflageschienen, Regelscheiben, Führungsrollen oder dergleichen aufgenommen und geführt werden kann.

Aus der DE 100 30 087 A1 ist eine Werkzeugmaschine bekannt, mit wenigstens einer Spindel zur Aufnahme und zum Drehantrieb eines Werkstückes um eine Z-Achse, wenigstens einer Bearbeitungseinheit zur Bewegung des Werkzeuges, beispielsweise eines Scheibenfräsers, wenigstens in X-Richtung in Abhängigkeit von der Drehlage der Werkstückspindel, und mit einer Messvorrichtung, insbesondere einer Rundheits-Messvorrichtung, wobei die Messvorrichtung direkt am Werkzeugsupport angeordnet ist.

Aus der DE 10 2009 042 252 A1 ist eine Schleifmaschine bekannt, die eine Messvorrichtung aufweist, die zur Inprozess-Messung an Prüflingen während eines Bearbeitungsvorganges ausgebildet ist. Zu diesem Zweck weist die Messvorrichtung einen Messkopf auf, der über ein Gestänge schwenkbar mit einem Grundkörper der Messvorrichtung verbunden ist. Der Messkopf weist einen auslenkbaren Messtaster auf, der mit einem Messprisma gekoppelt ist und zur Bestimmung des Durchmessers oder der Rundheit des Prüflings vorgesehen ist. Das Gestänge soll dazu ausgebildet sein, zumindest über einen bestimmten Bereich Bewegungen des Prüflings nachvollziehen zu können, beispielsweise eine Drehung eines Kurbelzapfens einer Kurbelwelle um deren Drehachse.

Auf diese Weise kann grundsätzlich auch bei einer Schleifbearbeitung exzentrisch angeordneter Zylinderflächen zumindest abschnittsweise eine Inprozess-Messung erfolgen. Dies kann gleichzeitig mit der Schleifbearbeitung erfolgen. Jedoch weist die Messvorrichtung einen komplexen Aufbau auf. Das Gestänge ist aufwändig gestaltet und im Betrieb aufwändig zu steuern.

Die sogenannte Inprozess-Messung, also eine Messung während eines Bearbeitungsgangs, kann hochgenaue Bearbeitungsgänge erlauben und zur Erhöhung der Fertigungsqualität und Prozesssicherheit beitragen. Zu diesem Zweck ist es jedoch regelmäßig erforderlich, für jede zu messende Werkstückabmessung, also etwa für jeden Durchmesser, einen genau auf das zu erwartende Maß abgestimmten Messkopf bereitzustellen. Dies kann etwa ein Einzweck-Messkopf sein, oder aber ein Messkopf, an dem etwa zwei Messtaster einstellbar aufgenommen sind, die zueinander einen Abstand aufweisen, der dem erwarteten Abstand entspricht. Die Messtaster sind jeweils an das zu prüfende Maß hochgenau anzupassen und entsprechend auszurichten.

Ein solcher Inprozess-Messkopf ist etwa in der DE 196 16 353 A1 gezeigt. Nachteilig können dabei aufwändige Einricht-, Justier- bzw. Eichprozesse sein, die erforderlich sind, um den Messkopf für den jeweiligen Einsatzzweck anzupassen. Insbesondere bei der Einzelbearbeitung, bei Kleinserien und Mittelserien kann etwa das Einrichten des Messkopfes einen nicht vernachlässigbaren Zeitaufwand mit sich bringen.

Vor diesem Hintergrund muss bereits eingewandt werden, dass die aus der DE 10 2009 042 252 A1 bekannte Messvorrichtung unter Umständen nicht den bei einer Inprozess-Messung erforderlichen Messgenauigkeiten entsprechen kann. Der zugehörige Messkopf weist einen Messtaster und ein Messprisma auf, die über eine Mehrzahl von Gestängeelementen des Gestänges mit einem absoluten Maßbezug gekoppelt sind. In die Lage des Messkopfes relativ zum Prüfling können sämtliche Abweichungen entlang von Einzelelementen der kinematischen Kette des Gestänges eingehen. Das kann insbesondere bei der abschnittsweisen Vermessung von exzentrischen Werkstücken nachteilig sein. Die Lage des Messkopfes relativ zum Prüfling, etwa relativ zu dessen Winkellage, kann fehlerbehaftet sein.

Vor diesem Hintergrund liegt der Erfindung die Aufgabe zugrunde, eine Werkzeugmaschine, insbesondere eine Schleifmaschine, anzugeben, bei der bei geringem Aufwand eine hochgenaue und hochflexible Vermessung von Werkstücken gestattet ist und möglichst mit nur einer Messkonfiguration besonders variabel gemessen werden kann. Ferner soll ein Verfahren zur Vermessung eines Werkstücks, insbesondere eines Werkstückdurchmessers, angegeben werden, das etwa mit der Werkzeugmaschine durchgeführt werden kann.

Diese Aufgabe wird erfindungsgemäß durch eine Werkzeugmaschine, insbesondere eine Schleifmaschine, nach Anspruch 1 gelöst.

Die Aufgabe der Erfindung wird auf diese Weise vollkommen gelöst.

Erfindungsgemäß weist nämlich der Messkopf im Vergleich zum erwarteten Maß des zu vermessenden Werkstücks ein "Übermaß" auf, das beim Messen jedoch kompensiert wird. Etwa beim Messen eines Durchmessers des Werkstücks wird zunächst ein erster Messtaster der zwei Messtaster durch eine Bewegung der Werkzeugeinheit, an der die Messeinrichtung aufgenommen ist, entlang der Zustellachse verfahren, bis eine Messung erfolgen kann. Anschließend wird das Werkstück etwa auf der gegenüberliegenden Seite durch einen zweiten Messtaster der zwei Messtaster angetastet, indem die Werkzeugeinheit entsprechend entlang der Zustellachse verfahren wird.

Bei dieser doppelten Antastung kann der Verfahrweg der Werkzeugeinheit bestimmt werden. Ausgehend von dem Basisabstand, der unter Verwendung des bekannten Referenzmaßes ermittelt ist, kann in einfacher Weise der Ist-Abstand ermittelt werden.

Auf diese Weise ist die Werkzeugmaschine in besonders vorteilhafter Art dazu ausgebildet, eine Messung durchzuführen, die Elemente einer absoluten Messung und einer relativen Messung kombinieren kann. Maschinenseitige Ungenauigkeiten, etwa Verformungen aufgrund von Erwärmung im Betrieb oder Ähnliches, können regelmäßig nur über den Relativabstand der zwei absoluten Ist-Lagen der Werkzeugeinheit entlang der Zustellachse beim Antasten in das Messergebnis eingehen. Die Messung kann fehlerarm erfolgen.

Auf den Messkopf selbst, insbesondere den Basisabstand zwischen den zwei Messtastern, können maschinenseitige Einflussfaktoren nicht in nennenswerter Weise einwirken. Im Vergleich zur Inprozess-Messung, bei der der Messkopf hochgenau auf das erwartete Maß eingestellt werden muss, ist eine deutlich erhöhte Flexibilität gegeben. Auf diese Weise kann etwa auch bei Einzelfertigungen, Kleinserien oder mittleren Serien bei geringem Aufwand eine hohe Fertigungsqualität gewährleistet werden. Insbesondere bei derartigen Anwendungen ist die zur Messung erforderliche Zeit, in der etwa kein Eingriff der Schleifscheibe erfolgen kann, nicht von hoher Bedeutung.

Es versteht sich, dass die Fähigkeit zur Erfassung der Ist-Lagen zur Ermittlung des Verfahrweges genutzt werden kann. Der Verfahrweg kann dem Abstand zweier Ist-Lagen der Werkzeugeinheit entlang der Zustellachse beim Antasten entsprechen. Die Ist-Lagen können absolut oder relativ erfasst werden.

Bekannte Absolutmessköpfe weisen im Regelfall zumindest zwei komplexe Messzellen auf, denen jeweils ein Taster zugeordnet ist. Bauartbedingt sind die Taster beweglich angeordnet und beispielsweise scherenförmig oder aber als aufeinander zu bewegbare, im Wesentlichen parallel zueinander angeordnete Schenkel ausgeführt. Somit sind Absolutmessköpfe im Regelfall sehr aufwändig gestaltet. Gewicht und Einbaugröße sind beträchtlich. Aufgrund hoher Investitionskosten scheiden Absolutmessköpfe als Messmittel für eine Vielzahl von Anwendungen aus. Der komplexe Aufbau eines Absolutmesskopfs, bei dem die Messtaster zueinander beweglich angeordnet sind, geht häufig mit Verringerung der Messgenauigkeit einher. Derartige Messköpfe können aufgrund ihres komplexen Aufbaus nur mit hohen Kosten realisiert werden.

Demgegenüber führt die Kombination des Messkopfes mit den zwei Messtastern, die in der Messkonfiguration einen fixen Basisabstand zueinander aufweisen, mit der - ohnehin vorgesehenen - verfahrbaren Werkzeugeinheit bei deutlich geringerem baulichen Aufwand und Kostenaufwand zu höheren Messgenauigkeiten. Wie eingangs erwähnt, kann eine maschinenseitige Abweichung, etwa der sogenannte thermische Gang, nur über einen geringen Relativwert, nämlich die Differenz zwischen zwei Ist-Lagen der Werkzeugeinheit, auf das Messergebnis Einfluss nehmen. Ein Eichen der Messeinrichtung anhand des bekannten Referenzmaßes kann dazu führen, dass ein großer Anteil des Basisabstands gewissermaßen fehlerfrei oder fehlerarm in dessen Ermittlung eingeht.

Bei bekannten Inprozess-Messköpfen müssen etwa dann, wenn eine Mehrzahl von Durchmessern am gleichen Werkstück in einer Aufspannung zu schleifen sind, für jeden dieser Durchmesser eigene Messmittel, etwa jeweils ein eigener Messkopf, bereitgehalten werden.

Der Messkopf mit "Übermaß" kann es erlauben, jeden dieser Durchmesser bei der Fertigung abzuprüfen, ohne dass das Werkstück ausgespannt werden muss. Auch in diesem Zusammenhang kann sich ein deutlich verringerter Investitionsaufwand und Bauraumaufwand bei nahezu gleichen Genauigkeiten ergeben.

Es versteht sich, dass der Begriff "Einbringen" relativ verstanden werden kann. Ein Einbringen des Werkstücks in den Messbereich zwischen den zwei Messtastern der Messeinrichtung kann etwa auch dadurch erfolgen, dass die Messtaster zum Werkstück hin bewegt werden.

Die zwei Messtaster können etwa als taktile Messtaster oder aber als berührungslos messende Messtaster ausgebildet sein.

Gemäß einer weiteren Ausgestaltung der Erfindung weist die Messeinrichtung einen Messkopf auf, an dem die zwei Messtaster aufgenommen sind, wobei der Messkopf verschwenkbar ist, um das Werkstück in den Messbereich einzubringen.

Auf diese Weise kann der Messkopf über eine einfache Schwenkbewegung in Richtung auf das Werkstück bewegt werden, um die Antastungen durchführen zu können. Dies kann etwa durch einen Linearantrieb erfolgen, beispielsweise einen Hydraulikzylinder. Durch die Verschwenkbarkeit können Kollisionen vermieden werden, die beispielsweise durch das Verfahren der Werkzeugeinheit bei einer Schleifbearbeitung bedingt sein können.

Abgesehen von einer solchen Schwenkvorrichtung sind für die Messeinrichtung regelmäßig keine weiteren separaten Antriebseinrichtungen erforderlich.

Der Messkopf kann etwa U-förmig gestaltet sein. Der erste und der zweite Messtaster können dabei die Schenkel des U bilden. Der Innenraum des U kann den Messbereich bestimmen.

Gemäß einem weiteren Aspekt der Erfindung weist die Messeinrichtung einen Koppelgetriebemechanismus auf, der ein Verschwenken zwischen einer Messstellung und einer Außer-Eingriff-Stellung erlaubt.

Ein Koppelgetriebemechanismus kann besonders platzsparend ausgebildet sein. Durch den Koppelgetriebemechanismus können zwei Endlagen definiert sein, nämlich etwa die Messstellung und die Außer-Eingriff-Stellung. Insbesondere die Messstellung kann durch konstruktive Maßnahmen, wie etwa Anschläge oder dergleichen, mit hoher Reproduzierbarkeit umgesetzt werden.

Wenn die Messstellung und die Außer-Eingriff-Stellung etwa durch mechanische Maßnahmen beim Koppelgetriebemechanismus definiert sind, kann zum Antrieb der Messeinrichtung ein einfaches Antriebselement bzw. Stellelement gewählt werden. Aufwändige Steuereinrichtungen für den Koppelgetriebemechanismus können auf diese Weise vermieden werden.

Anstatt eines Koppelgetriebemechanismus können alternativ etwa Drehgelenke mit definiertem Schwenkbereich oder etwa mit steuerbaren Motoren gekoppelte Schwenkarme vorgesehen sein. Es kann von Vorteil sein, wenn die Motoren eine hohe Positioniergenauigkeit aufweisen.

Gemäß einer weiteren Ausgestaltung weisen der Basisabstand und der Ist-Abstand ein Verhältnis von ungefähr maximal 2:1, vorzugsweise maximal 1,5:1, weiter bevorzugt maximal 1,2:1, noch weiter bevorzugt maximal 1,1:1 auf.

Je kleiner das Verhältnis zwischen dem Basisabstand und dem Ist-Abstand ist, desto geringer werden maschinenseitige Einflüsse bei der Ermittlung des Ist-Abstands.

Demgegenüber kann sich bei einem großen Verhältnis zwischen dem Basisabstand und dem Ist-Abstand eine höhere Flexibilität der Messeinrichtung ergeben. Der Messkopf kann für eine Vielzahl von Ist-Abständen, insbesondere Ist-Durchmessern, geeignet sein. Maschinenseitige Einflüsse kommen im Wesentlichen nur über den Verfahrweg, der etwa der Differenz zwischen dem Basisabstand und dem Ist-Abstand entspricht, zum Tragen.

Der Basisabstand kann durch Verfahren der Werkzeugeinheit entlang der Zustellachse und beidseitiges Antasten des in der Werkzeugaufnahme aufgenommenen Referenzmaßes unter Berücksichtigung des Verfahrweges der Werkzeugeinheit ermittelt werden.

Bei einem geringen Verhältnis zwischen dem Basisabstand und dem Referenzabstand kann eine hohe Genauigkeit bei der Ermittlung des Basisabstands gewährleistet werden. Höchste Genauigkeiten können erzielt werden, wenn das Referenzmaß nahezu dem Basisabstand entspricht, also nur unwesentlich kleiner ist.

Gemäß einer weiteren Ausgestaltung ist zumindest ein Messtaster der zwei Messtaster in einem Proportionalitätsbereich auslenkbar, wobei die Steuereinrichtung dazu ausgebildet ist, die Auslenkung des zumindest einen Messtasters zu erfassen.

Zu diesem Zweck kann der zumindest eine Messtaster mit einem Wegaufnehmer zur Erfassung der Auslenkung versehen sein. Wegaufnehmer können etwa als induktive Wegaufnehmer, kapazitive Wegaufnehmer oder als Potentiometergeber ausgebildet sein. Andere Prinzipien zur Erfassung der Auslenkung sind denkbar. Eine Erfassung der Auslenkung kann etwa auch über Dehnmessstreifen erfolgen. Es könnten auch Piezoelemente zur Anwendung kommen.

Auslenkbare Messtaster erlauben regelmäßig zumindest im Proportionalitätsbereich eine hochgenaue Lageerfassung.

Die Auslenkung des zumindest einen Messtasters kann bei der Ermittlung des Ist-Abstands berücksichtigt werden. Auf diese Weise können etwa absolute Maschineneinflüsse beim Verfahren der Werkzeugeinheit zum Antasten des Werkzeugs erkannt und ausgeglichen werden. In Kenntnis der Auslenkung des zumindest einen Messtasters kann der Verfahrweg der Werkzeugeinheit korrigiert werden.

Gemäß einer Weiterbildung der Erfindung ist das Werkstück an einer Werkstückspindel aufnehmbar, die selektiv um eine Werkstückspindelachse rotatorisch antreibbar ist, wobei die Werkstückspindelachse vorzugsweise senkrecht zur Zustellachse angeordnet ist, und wobei die Werkzeugspindel vorzugsweise eine Werkzeugspindelachse aufweist, die parallel zur Werkstückspindelachse angeordnet ist.

Eine solchermaßen gestaltete Werkstückspindel kann etwa auch als C-Achse bezeichnet werden. Eine steuerbare C-Achse kann eine gezielte Messung von Ist-Abständen an verschiedenen Stellen entlang des Werkstückumfangs erlauben.

Bei Verwendung zumindest eines auslenkbaren Messtasters kann sich der Anwendungsbereich der Messeinrichtung erweitern. Insbesondere in Kombination mit der selektiv um ihre Werkstückspindelachse antreibbaren Werkstückspindel, also der C-Achse, können etwa Unrundheiten des Werkstücks erfasst werden. Auf diese Weise können etwa auch Formtoleranzen überprüft werden.

Gemäß einer Weiterbildung ist die Werkzeugeinheit parallel zur Werkstückspindelachse relativ zum Werkstück verfahrbar.

Auf diese Weise können an einer Vielzahl verschiedener Axialpositionen des aufgenommenen Werkstücks Ist-Abstände ermittelt werden.

Gemäß einem weiteren Aspekt ist die Steuereinrichtung dazu ausgebildet, bei einer gekoppelten Bewegung die Werkzeugeinheit selektiv entlang der Zustellachse zu verfahren und die Werkstückspindel selektiv um die Werkstückspindelachse anzutreiben.

Eine derartige gekoppelte Bewegung erlaubt die Erfassung exzentrischer Geometrien, beispielsweise von Hubzapfen einer Kurbelwelle oder Nockenflächen einer Nockenwelle, oder weiteren Unrundheiten.

Es ist vorstellbar, durch beidseitiges Antasten mit beiden Messtastern entlang bestimmter Stellungen des umlaufenden exzentrischen Werkstücks die jeweiligen Ist-Abstände zu erfassen. Zusätzlich oder alternativ dazu können etwa mit einem auslenkbaren Messtaster darüber hinausgehend Oberflächenungenauigkeiten erfasst werden, wenn die Werkzeugeinheit derart bewegt wird, dass der Messtaster zumindest abschnittsweise beim Umlauf des Werkstücks an diesem zur Anlage gelangt.

Gemäß einem weiteren Aspekt ist die Steuereinrichtung dazu ausgebildet, bei einer gekoppelten Bewegung ferner die Werkzeugeinheit selektiv parallel zur Werkstückspindelachse zu verfahren.

Somit können etwa neben Rundheitstoleranzen, die etwa auf eine Axialposition des Werkstücks beschränkt sind, auch Zylinderformabweichungen ermittelt werden. Zu diesem Zweck kann die Werkzeugeinheit mit der Messeinrichtung bei der Messung axial entlang des Werkstücks verfahren werden. Das Antasten kann beispielsweise entlang einer Spiralbahn auf dem Werkstück erfolgen.

Die Werkzeugeinheit kann etwa einen Kreuztisch umfassen oder auf einem Kreuztisch aufgenommen sein, der Führungen für die Zustellachse und die Bewegung relativ (beispielsweise parallel) zur Werkstückspindelachse bereitstellt. Es versteht sich jedoch, dass die Werkzeugeinheit auch anders gestaltet bzw. geführt sein kann. Grundsätzlich könnte etwa auf einen Kreuztisch mit zwei Führungen verzichtet werden. Die Werkzeugeinheit könnte etwa an einer Führung für die Zustellachse aufgenommen sein. Eine Bewegung der Werkzeugeinheit parallel zur Werkstückspindelachse kann dabei grundsätzlich auch durch eine Bewegung des aufgenommenen Werkstücks relativ zur Werkzeugeinheit bewirkt werden. Weitere Gestaltungen sind denkbar.

Gemäß einem weiteren Aspekt der Erfindung ist die Steuereinrichtung dazu ausgebildet, die Werkzeugeinheit mit der Messeinrichtung selektiv in einem Schnellgang oder einem Tastgang zu verfahren.

Auf diese Weise kann ein Optimum zwischen Zeitersparnis durch Erhöhung der Verfahrgeschwindigkeit und Betriebssicherheit gewahrt werden. Im Tastgang, etwa einem Kriechgang, kann die Werkzeugeinheit abrupt abgestoppt werden. Dies kann etwa auch dann noch erfolgen, wenn der Messkopf signalisiert, dass zumindest einer der zwei Messtaster das Werkstück mit einer bestimmten Antastkraft antastet. Zustellbewegungen, bei denen keine Kollisionen zu befürchten sind, können dagegen mit hohen Beschleunigungen bzw. Geschwindigkeiten erfolgen.

Gemäß einer weiteren Ausgestaltung ist die Steuereinrichtung dazu ausgebildet, anhand des Ist-Abstands des Werkstücks, insbesondere des Ist-Durchmessers, die Werkzeugeinheit und das Werkzeug in einem nachgelagerten Bearbeitungsgang selektiv anzutreiben und zu verlagern.

Auf diese Weise kann etwa im Laufe der Vermessung des Werkstücks ein Korrekturwert ermittelt werden, der einer nachgelagerten Bearbeitung zugrunde zu legen ist. Auf diese Weise kann das Werkstück etwa Stück für Stück mittels wechselseitigem Vermessen und Korrigieren sicher auf die erforderlichen Endabmessungen gebracht werden. Auf Basis des Korrekturwertes kann die Steuereinrichtung die Werkzeugeinheit zielgerichtet zustellen und das Werkzeug definiert antreiben.

Gemäß einem weiteren Aspekt ist die Steuereinrichtung mit einem Positionsgeber der Werkzeugeinheit gekoppelt, an dem die Ist-Lage der Werkzeugeinheit erfasst werden kann.

Der Positionsgeber kann etwa mit einer inkrementellen oder absoluten Maßverkörperung gekoppelt sein, die eine hochgenaue Erfassung der Ist-Lage der Werkzeugeinheit auf der Zustellachse erlaubt. Der Vergleich verschiedener Ist-Lagen der Werkzeugeinheit erlaubt eine hochgenaue Bestimmung des Verfahrweges.

Die Aufgabe der Erfindung wird ferner gelöst durch ein Verfahren zur Vermessung eines Werkstücks, insbesondere eines Werkstückdurchmessers, in einer Werkzeugmaschine, insbesondere einer Schleifmaschine, mit den folgenden Schritten:
- Bereitstellen einer Messeinrichtung, die entlang einer Zustellachse relativ zu einem Werkstück verfahrbar ist, wobei die Messeinrichtung vorzugsweise an einer Werkzeugeinheit aufgenommen ist, wobei die Messeinrichtung zwei Messtaster aufweist,
- Einstellen eines Basisabstands zwischen den zwei Messtastern, der größer als ein bekanntes Referenzmaß einer Referenzgeometrie gewählt ist und einen Messbereich definiert,
- Aufnahme der Referenzgeometrie in der Werkzeugmaschine,
- Einbringen des Referenzmaßes in den Messbereich,
- Verfahren der Messeinrichtung relativ zur Referenzgeometrie und wechselseitiges Antasten des Referenzmaßes mit den Messtastern, dabei Erfassung der Ist-Lagen der Messeinrichtung, somit Erfassung des Verfahrweges der Messeinrichtung, und
- Ermitteln des Basisabstands unter Berücksichtigung des Referenzmaßes und der Ist-Lagen der Messeinrichtung beim Antasten.

Auch hierbei versteht sich, dass der Schritt des Einbringens durch eine Relativbewegung zwischen dem Referenzmaß der Referenzgeometrie und der Messeinrichtung erfolgen kann.

Mit dem Verfahren kann in einfacher Weise ein Eichen oder Kalibrieren der Messeinrichtung durchgeführt werden. Hiernach ist die Messeinrichtung mit den zwei Messtastern zur Vermessung einer Vielzahl von Werkstückgeometrien geeignet, sofern diese in den Messbereich einführbar sind.

Das erfindungsgemäße Verfahren umfasst ferner die folgenden Schritte:
- Aufnahme eines Werkstücks in der Werkzeugmaschine, Einbringen einer Messgeometrie des Werkstücks in den Messbereich,
- wechselseitiges Antasten der Messgeometrie des Werkstücks mit den Messtastern, dabei Erfassung des Verfahrweges der Messeinrichtung, wobei das wechselseitige Antasten zunächst ein Antasten des Werkstücks mit einem ersten Messtaster der zwei Messtaster, der durch eine Bewegung der Werkzeugeinheit, an der die Messeinrichtung aufgenommen ist, entlang der Zustellachse verfahren wird, bis eine Messung erfolgen kann, und anschließend ein Antasten einer gegenüberliegenden Seite des Werkstücks mit dem zweiten Messtaster, indem die Werkzeugeinheit entsprechend entlang der Zustellachse verfahren wird, umfasst, und
- Ermitteln eines Ist-Abstands der Messgeometrie unter Berücksichtigung des Basisabstands und des Verfahrweges der Messeinrichtung beim Antasten.

Nach einmaligem Eichen der Messeinrichtung anhand eines bekannten Referenzmaßes kann die Messeinrichtung für eine Vielzahl von Messvorgängen genutzt werden. Das Messen kann etwa in einen Fertigungsablauf eingebunden sein, der beispielsweise bei einem einmal eingespannten Werkstück eine Grobbearbeitung, eine Feinbearbeitung und eine Finish-Bearbeitung umfasst.

Es versteht sich, dass die Ist-Lagen der Messeinrichtung, die zur Ermittlung des Verfahrweges der Messeinrichtung herangezogen werden können, etwa als Absolutlagen oder aber als Relativlagen in Bezug auf eine Maßverkörperung verstanden werden können. Bei der Ermittlung des Ist-Abstands kann der Verfahrweg der Messeinrichtung relativ oder absolut ermittelt werden.

Das Verfahren kann insbesondere mit einer Werkzeugmaschine nach einem der vorgenannten Aspekte durchgeführt werden. Es versteht sich, dass auch das Verfahren gemäß einem oder mehreren Aspekten der vorgenannten Werkzeugmaschine weitergebildet sein kann.

Die Aufgabe der Erfindung wird ferner gelöst durch ein Maschinensteuerungsprogramm, das Programmcode aufweist, der dazu ausgebildet ist, eine Steuereinrichtung einer Werkzeugmaschine gemäß der vorliegenden Offenbarung zu veranlassen, die Schritte des Verfahrens nach einem der vorgenannten Aspekte auszuführen, wenn das Maschinensteuerungsprogramm auf der Steuereinrichtung ausgeführt wird.

Weitere Merkmale und Vorteile der Erfindung ergeben sich aus der nachfolgenden Beschreibung mehrerer bevorzugter Ausführungsbeispiele unter Bezugnahme auf die Zeichnungen. Es zeigen:
- Fig. 1: eine Draufsicht einer erfindungsgemäßen Werkzeugmaschine;
- Fig. 2: eine perspektivische Ansicht einer erfindungsgemäßen Werkzeugmaschine in Anlehnung an Fig. 1;
- Fig. 3a, 3b: Seitenansichten einer Messeinrichtung zur Verwendung bei der Werkzeugmaschine gemäß Fig. 2 in einer Außer-Eingriff-Stellung und einer Messstellung;
- Fig. 4: eine vereinfachte schematische Ansicht eines Messkopfes und eines Referenzwerkstücks;
- Fig. 5a, 5b: verschiedene Lagen des Messkopfes gemäß Fig. 4 beim Antasten eines Werkstücks;
- Fig. 6a, 6b: verschiedene Lagen des Messkopfes gemäß Fig. 4 beim Antasten eines Werkstücks mit einer gegenüber Fig. 5a, 5b abgewandelten Ansteuerung;
- Fig. 7: eine Ansicht des Messkopfes gemäß Fig. 4 beim Erfassen von Formtoleranzen eines Werkstücks;
- Fig. 8: eine Ansicht des Messkopfes gemäß Fig. 4 beim Antasten eines Werkstücks, das exzentrisch umläuft; und
- Fig. 9: schematische Flussdiagramme eines Verfahrens zum Eichen einer Messeinrichtung und eines Verfahrens zur Vermessung eines Werkstücks.

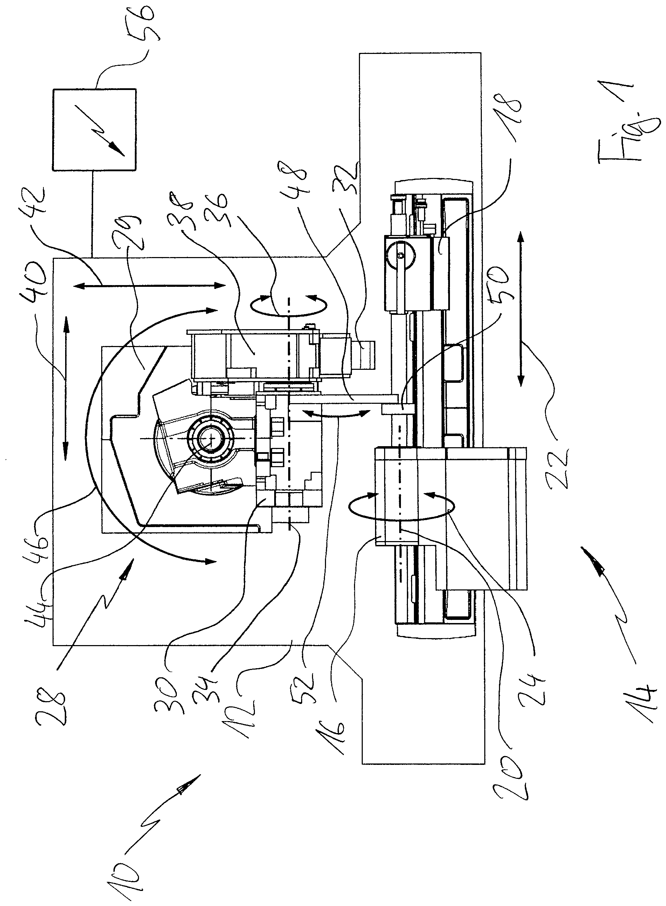

In Fig. 1 ist eine erfindungsgemäße Werkzeugmaschine dargestellt und insgesamt mit 10 bezeichnet.

Die Werkzeugmaschine 10 ist vorliegend als Schleifmaschine ausgebildet. Die Werkzeugmaschine 10 weist einen Maschinentisch 12 auf, der etwa als Teil eines Gestells ausgebildet sein kann. Auf dem Maschinentisch 12 ist eine Werkstückaufnahme 14 aufgenommen und geführt. Die Werkstückaufnahme 14 weist einen Werkstückspindelstock auf, der mit einer Werkstückspindel 16 versehen ist. Der Werkstückspindel 16 ist ein Reitstock 18 zugeordnet. Zwischen der Werkstückspindel 16 und dem Reitstock 18 kann ein Werkstück aufgenommen werden (in Fig. 1 nicht dargestellt).

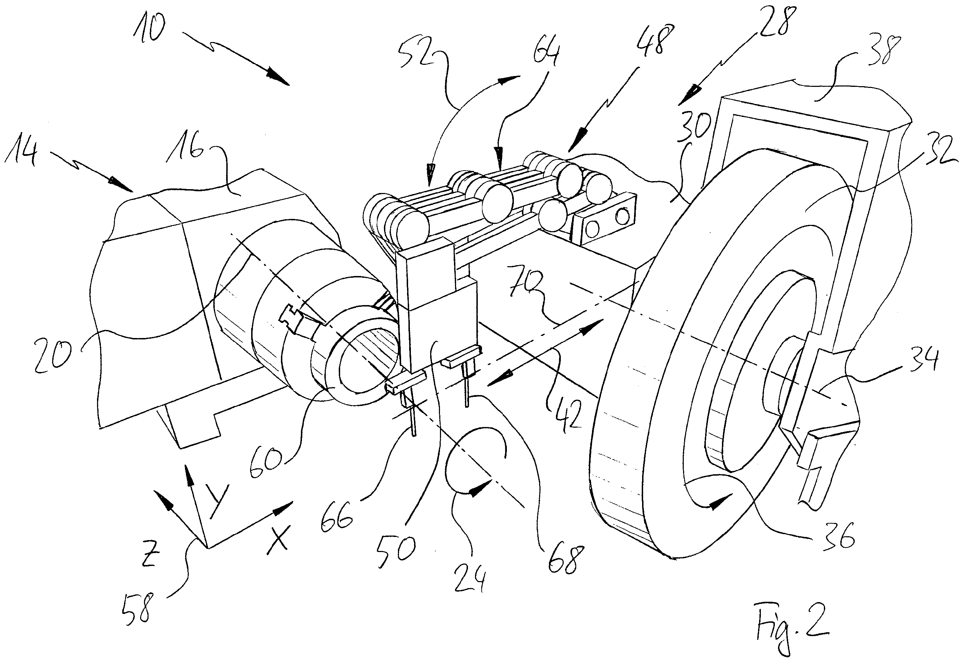

Die Werkstückspindel 16 weist eine Werkstückspindelachse 20 auf, um die das Werkstück gegebenenfalls rotatorisch antreibbar ist, vgl. auch einen mit 24 bezeichneten Pfeil. Die Werkstückspindelachse 20 kann etwa auch als C-Achse bezeichnet werden. Eine C-Achse kann eine gezielte, gesteuerte Verdrehung eines in der Werkstückaufnahme 14 aufgenommenen Werkstücks erlauben. Ein mit 22 bezeichneter Pfeil kennzeichnet eine mögliche Verfahrbewegung entlang einer sogenannten Z-Achse, vgl. auch Fig. 2. Entlang der Z-Achse kann eine Relativbewegung zwischen dem Werkstück und einem Bearbeitungswerkzeug erfolgen. Hierfür kann entweder das Werkstück, das Werkzeug, oder aber beide gemeinsam entlang der Z-Achse verfahren werden. Die Z-Achse liegt parallel zur Werkstückspindelachse 20 oder aber deckungsgleich zu dieser.

Am Maschinentisch 12 der Werkzeugmaschine 10 ist ferner eine Werkzeugeinheit 28 aufgenommen. Die Werkzeugeinheit 28 kann einen Werkzeugtisch 29 aufweisen. Der Werkzeugtisch 29 kann etwa als Kreuztisch ausgebildet sein. Andere Gestaltungen sind denkbar. Die Werkzeugeinheit 28 weist eine Werkzeugspindel 30 auf, die vorliegend etwa als Schleifkopf ausgebildet ist. An der Werkzeugspindel 30 ist ein Werkzeug 32, hier etwa eine Schleifscheibe, aufgenommen. Das Werkzeug 32 kann durch die Werkzeugspindel 30 um eine Werkzeugspindelachse 34 herum in Rotation versetzt werden, vgl. einen mit 36 bezeichneten Pfeil. In Fig. 1 ist das Werkzeug 32 nur abschnittsweise sichtbar. Die Werkzeugeinheit 28 weist ferner eine Haube 38 auf, die einen Großteil des Werkzeugs 32 verdeckt.

Insbesondere wenn die Werkzeugeinheit 28 einen Werkzeugtisch 29 in Form eines Kreuztisches aufweist, kann die Werkzeugspindel 30 entlang eines mit 40 bezeichneten Pfeils relativ zur Werkstückaufnahme 14 verfahren werden. Der Pfeil 40 kann auch der Z-Achse zugeordnet sein, vgl. Fig. 2. Insbesondere dann, wenn die Werkstückaufnahme 14 bei der Bearbeitung des Werkstücks nicht zur Längsverschiebung entlang des Pfeils 22 vorgesehen ist, kann die Relativbewegung zwischen dem Werkstück und dem Werkzeug 32 durch ein Verfahren der Werkzeugspindel 30 mit dem daran aufgenommenen Werkzeug 32 entlang des Pfeils 40 erfolgen.

Ein mit 42 bezeichneter Pfeil beschreibt eine Zustellrichtung, die einer X-Achse zugeordnet werden kann, vgl. wiederum Fig. 2. Entlang der X-Achse kann eine Zustellung des Werkzeugs 32 in Richtung auf das Werkstück erfolgen, um mit diesem in Eingriff zu treten. Die X-Achse kann auch als Zustellachse bezeichnet werden, vgl. die Zustellachse 70 in Fig. 2. Die Bewegung entlang der X-Achse oder Zustellachse 70 kann etwa durch geeignete Führungsmittel des Werkzeugtisches 29 und/oder des Maschinentisches 12 geführt werden.

Beispielhaft weist in Fig. 1 die Werkzeugeinheit 28 ferner eine B-Achse 44 auf. In der Darstellung gemäß Fig. 1 verläuft die B-Achse 44 senkrecht zur Ansichtsebene. Die B-Achse 44 ermöglicht ein Verschwenken der Werkzeugspindel 30, vgl. einen mit 46 bezeichneten Schwenkpfeil. Die B-Achse 44 kann es erlauben, eine Mehrzahl von Werkzeugspindeln 30 mit Werkzeugen 32 an der Werkzeugeinheit 28 vorzusehen. Diese können bei Bedarf durch Verschwenken der B-Achse 44 in eine Bearbeitungsstellung überführt werden. Auf diese Weise kann eine flexible Bearbeitung, etwa mit Werkzeugen 32 mit verschiedenen Schleifmittelwerkstoffen ermöglicht werden. Somit können etwa verschiedene Schleifscheiben für eine Grobbearbeitung, Feinbearbeitung oder Finishbearbeitung ohne besonderen Rüstaufwand mit dem Werkstück in Eingriff gebracht werden. Die Zuordnung der B-Achse 44 zur Z-Achse, vgl. die Pfeile 22 und 40, bzw. zur X-Achse, vgl. den Pfeil 42, kann grundsätzlich auch anders als in Fig. 1 gestaltet sein. Beispielhaft könnte die B-Achse 44 alternativ auch parallel zur Werkstückspindelachse 20 bzw. zur Werkzeugspindelachse 34 angeordnet sein. Bei einer solchen Gestaltung könnte etwa ein weiteres Werkzeug an einem Ausleger aufgenommen sein, der an der Werkzeugspindel 30 aufgenommen ist und zum Einschwenken des weiteren Werkzeugs um die Werkzeugspindelachse 34 in Richtung auf das Werkstück verschwenkbar ist (in Fig. 1 nicht dargestellt).

Es versteht sich, dass die Werkzeugmaschine 10 auch ohne die B-Achse 44 ausgeführt sein kann, insbesondere dann, wenn nur eine Werkzeugspindel 30 vorgesehen ist.

An der Werkzeugspindel 30 ist eine Messeinrichtung 48 aufgenommen, vgl. auch Fig. 2. Die Messeinrichtung 48 weist einen Messkopf 50 auf. Ein mit 52 bezeichneter Pfeil deutet an, dass die Messeinrichtung 48 mit dem Messkopf 50 verschwenkbar an der Werkzeugspindel 30 aufgenommen ist.

Die Werkzeugmaschine 10 weist ferner eine Steuereinrichtung 56 auf, die insbesondere dazu ausgebildet sein kann, die Werkstückaufnahme 14 mit der Werkstückspindel 16, die Werkzeugeinheit 28 mit der Werkzeugspindel 30, das Werkzeug 32 sowie gegebenenfalls die B-Achse 44 bzw. die Werkstückspindelachse 20 gezielt zu deren Antrieb bzw. zu deren Verlagerung anzusteuern. Bewegungen können dabei etwa entlang der X-Achse oder der Z-Achse erfolgen. Ferner kann die Steuereinrichtung 56 dazu ausgebildet sein, von Komponenten der Werkzeugmaschine 10 Betriebsparameter, etwa Lageparameter, zugeführt zu bekommen. Die Steuereinrichtung 56 kann etwa eine Erfassungseinheit, eine Auswerteeinheit und eine Kontrolleinheit aufweisen.

In Fig. 2 ist zur Veranschaulichung der Achsen X, Y, Z der Werkzeugmaschine 10 ein Koordinatensystem 58 dargestellt. Es versteht sich, dass die genannten Achsen und Richtungen lediglich zu Veranschaulichungszwecken dienen und nicht dazu, den Gegenstand der Offenbarung einzuschränken. Es versteht sich ferner, dass Bewegungen von Komponenten der Werkzeugmaschine 10 zueinander grundsätzlich relativ erfolgen können. Das heißt, wenn etwa ein erstes Element gegenüber einem zweiten Element verfahrbar sein soll, kann entweder das erste Element oder das zweite Element die Bewegung vollziehen. Ebenso ist denkbar, dass beide Elemente gemeinsam bewegt werden.

In Fig. 2 ist an der Werkzeugspindel 16 der Werkstückaufnahme 14 eine Werkstückspannvorrichtung 60 aufgenommen, die etwa als Spannfutter ausgebildet sein kann. Aus Veranschaulichungsgründen wurde in Fig. 2 auf die Darstellung verschiedener Komponenten der Werkzeugmaschine 10 verzichtet. Beispielhaft ist kein Reitstock 18 dargestellt. Es versteht sich, dass etwa gerade bei kurzen Werkstücken eine einseitige Aufnahme an der Werkstückspannvorrichtung 60 genügen kann. Demgegenüber können etwa besonders lange und/oder dünnwandige Werkstücke etwa neben der Werkstückspindel 16 und dem Reitstock 18, vgl. Fig. 1, zusätzlich über zumindest eine zwischengelagerte Lünette (nicht dargestellt) abgestützt werden.

Die Messeinrichtung 48 weist eine Einschwenkmimik auf, die etwa als Koppelgetriebemechanismus 64 ausgebildet sein kann. Die Messeinrichtung 48 ist an der Werkzeugspindel 30 aufgenommen und kann gemeinsam mit dieser entlang der Zustellachse 70 verfahren werden. Die Zustellachse 70 kann der X-Achse entsprechen oder parallel zu dieser angeordnet sein. Der Pfeil 42 deutet die zugehörige Hin- und Herbewegung an.

In Fig. 2 befindet sich die Messeinrichtung 48 in der Messstellung. In der Messstellung ist der Messkopf 50, der einen ersten Messtaster 66 und einen zweiten Messtaster 68 aufweist, in den Bereich der Werkstückspindelachse 20 verfahren bzw. verschwenkt.

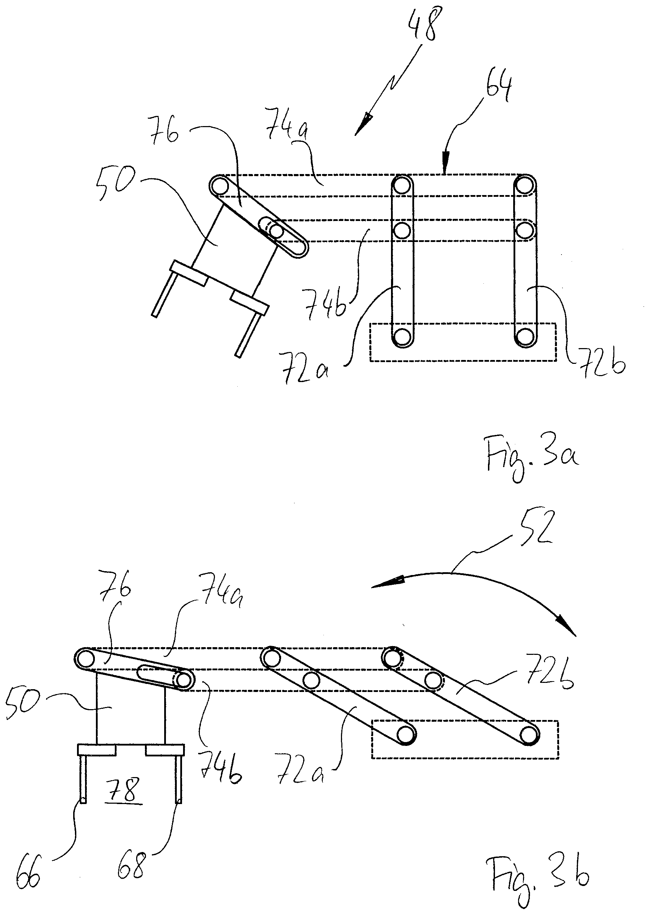

In den Fig. 3a und 3b wird ein beispielhafter Aufbau der Messeinrichtung 48 erläutert. Die Messeinrichtung 48 weist einen Schwenkmechanismus auf, der durch den Koppelgetriebemechanismus 64 verkörpert ist. Der Koppelgetriebemechanismus 64 ist vorliegend etwa als Doppelschwinge ausgeführt. Andere Mechanismen zur Realisierung der Einschwenkfunktionalität der Messeinrichtung 48 sind denkbar.

Der Koppelgetriebemechanismus 64 weist zwei Koppelglieder 72a, 72b auf, die etwa als Schwingen ausgebildet sind. Die Schwingen 72a, 72b sind drehbar an der Werkzeugspindel 30 aufgenommen, vgl. auch Fig. 2. Die Schwingen 72a, 72b sind jeweils mit Koppelgliedern 74a, 74b verbunden, die etwa als Koppeln ausgestaltet sind. Bei den in den Fig. 3a und 3b veranschaulichten Längenverhältnissen kann sich sowohl für die Schwingen 72a, 72b als auch für die Koppeln 74a, 74b beim Verschwenken, vgl. den Pfeil 52, jeweils zueinander eine Parallelführung ergeben. Andere Längenverhältnisse sind ohne Weiteres denkbar.

Die Koppeln 74a, 74b sind in ihrem vorderen Bereich mit einem Ausleger 76 verbunden. Der Ausleger 76 ist mit der Koppel 74a etwa über ein Drehgelenk verknüpft. Die Koppel 74b ist mit dem Ausleger 76 etwa über eine Längsnut verbunden.

Der Koppelgetriebemechanismus 64 kann etwa dahingehend ausgestaltet werden, bestimmte zulässige Bauraumverhältnisse zu erfüllen. Insbesondere im Gegensatz zu einem reinen Schwenkarm können sich Bauraumvorteile ergeben. Es versteht sich jedoch, dass das Verschwenken der Messeinrichtung 48 auch in anderer Weise bewirkt werden kann.

Ein Stellzylinder ist mit der Schwinge 72b gekoppelt. Beim Ausfahren des Stellzylinders kann der Koppelgetriebemechanismus 64 verschwenkt werden. Andere Antriebsmittel für das Verschwenken sind denkbar.

Die in Fig. 3b gezeigte Darstellung kann etwa der Messstellung gemäß Fig. 2 entsprechen. Demgegenüber veranschaulicht Fig. 3a etwa eine Außer-Eingriff-Stellung der Messeinrichtung 48. In der Messstellung gemäß Fig. 3b kann der Messkopf 50 mit dem ersten Messtaster 66 und dem zweiten Messtaster 68 ein Werkstück etwa derart umschließen, dass ein wechselseitiges Antasten ermöglicht ist. Die Messtaster 66, 68 definieren einen Messbereich 78, der etwa die maximale Größe eines zu vermessenden Werkstücks bzw. eines zu vermessenden Abschnitts des Werkstücks bestimmt.

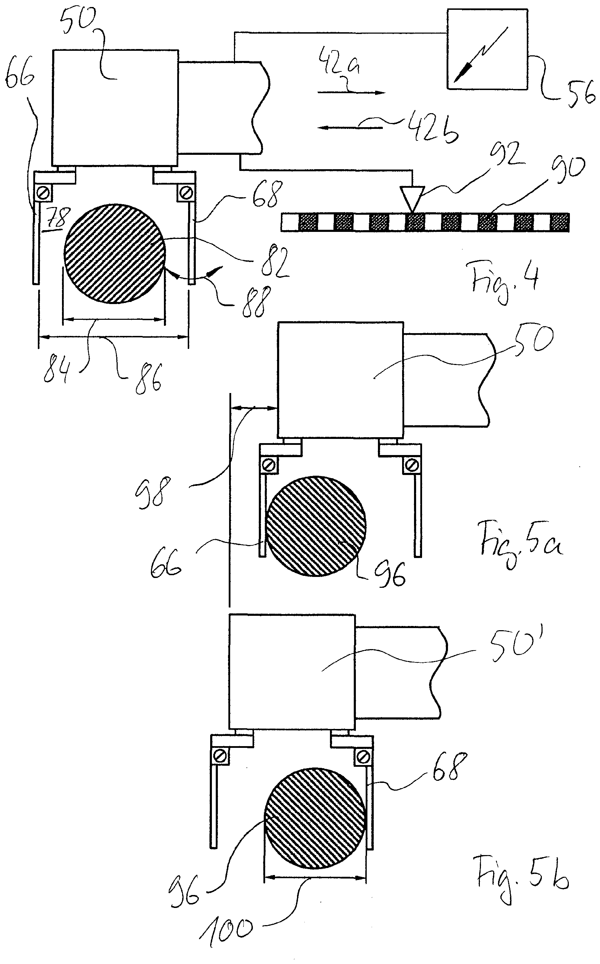

In Fig. 4 wird beispielhaft dargestellt, wie der Messkopf 50 der Messeinrichtung 48 mit den Messtastern 66, 68 vor der Vermessung geeicht werden kann. Zu diesem Zweck ist eine bekannte Referenzgeometrie 82, etwa eines Referenzwerkstücks, in den Messbereich 78 eingeführt worden. Das Referenzwerkstück mit der Referenzgeometrie 82 kann etwa in der Werkstückaufnahme 14 der Werkzeugmaschine 10 aufgenommen sein. Das Einbringen in den Messbereich 78 kann etwa durch das Verschwenken der Messeinrichtung 48 erfolgen.

Die Referenzgeometrie 82 des Referenzwerkstücks weist ein bekanntes Referenzmaß 84 auf. Zum Eichen bzw. zum Kalibrieren des Messkopfes 50 wird das Referenzmaß 84 bzw. die Referenzgeometrie 82 wechselseitig mit dem ersten Messtaster 66 bzw. dem zweiten Messtaster 68 seitlich angetastet. Die zugehörigen Bewegungen der Werkzeugspindel 30, vgl. Fig. 2, sind durch die Pfeile 42a, 42b angedeutet. Der Messkopf 50 ist beispielhaft über die Einschwenkmimik 64 und die Werkzeugspindel 30 mit einem Positionsgeber 92 und einer Maßverkörperung 90 verknüpft, die etwa eine Ist-Lage der Werkzeugeinheit 28 entlang der Zustellachse 70 beschreibt.

Auf diese Weise können beim jeweiligen Antasten der Referenzgeometrie 82 mit dem ersten Messtaster 66 und dem zweiten Messtaster 68 zugehörige Ist-Lagen erfasst werden. In einfacher Weise kann aus dem Abstand zwischen diesen Ist- Lagen und dem bekannten Referenzmaß 84 ein Basisabstand 86 ermittelt werden. Der Basisabstand 86 kann als Grundlage für alle nachgelagerten Messungen an Werkstücken dienen. Die vom Positionsgeber 92 erfassten Positionsdaten können etwa der Steuereinrichtung 56 zur Auswertung zugeführt werden. Die Lageerfassung kann auch anderweitig erfolgen. Der Positionsgeber 92 kann etwa als Inkrementalgeber oder als Absolutgeber ausgestaltet sein. Ferner können etwa optische, induktive, kapazitive oder magnetische Messprinzipien genutzt werden.

In Fig. 4 deutet ein mit 88 bezeichneter Pfeil ferner an, dass etwa der zweite Messtaster 68 um einen gewissen Betrag auslenkbar gestaltet sein kann. Auch eine solche Auslenkung des Messtasters 68 kann erfasst werden und der Steuereinrichtung 56 zugeführt werden. Der erste Messtaster 66 kann in gleicher Weise gestaltet sein. Beim Antasten der Referenzgeometrie 82 im Rahmen des Eichvorgangs können etwa der erste Messtaster 66 und der zweite Messtaster 68 in ihrer Neutralstellung, also ohne wesentliche Auslenkung, kalibriert werden. Zu diesem Zweck kann etwa die Ist-Lage der Werkzeugspindel 30 entlang der Zustellachse 70 variiert werden, bis das von den Messtastern 66, 68 jeweils ausgegebene Positionssignal etwa null ergibt. In einer solchen Neutralstellung können etwa sogenannte Messkreise des ersten und zweiten Messtasters 66, 68 genullt werden.

In nachfolgenden Messungen kann die Auslenkung des ersten Messtasters 66 bzw. des zweiten Messtasters 68 beim Antasten zusätzlich zu den Ist-Lagen der Werkzeugspindel 30 entlang der Zustellachse 70 berücksichtigt werden, um exakte Abstände ermitteln zu können.

In den Fig. 5a und 5b wird beispielhaft die Ermittlung eines Durchmessers eines Werkstücks 96 dargestellt. In Fig. 5a kommt der erste Messtaster 66 des Messkopfes 50 zur Anlage an das Werkstück 96. Ein anschließendes Verfahren der Werkzeugspindel 30 und somit auch des Messkopfes 50 führt dazu, dass der zweite Messtaster 68 auf der gegenüberliegenden Seite zur Anlage an das Werkstück 96 gelangt. Der Verfahrweg der Werkzeugspindel 30 wird durch einen mit 98 bezeichneten Pfeil veranschaulicht. In Kenntnis des Basisabstands 86, vgl. Fig. 4, und des Verfahrweges 98 kann in einfacher Weise ein Ist-Abstand 100, insbesondere ein Ist-Durchmesser, des Werkstücks 96 ermittelt werden.

Die in Fig. 4 durch den Pfeil 88 angedeutete Auslenkung des Messtasters 68 bzw. des Messtasters 66 kann etwa Korrekturwerte ergeben, die bei der Ermittlung des Ist-Abstands 100 berücksichtigt werden können.

In alternativer Weise kann beim jeweiligen Antasten des ersten bzw. des zweiten Messtasters 66, 68 die Werkzeugspindel 30 so lange verfahren werden, bis das durch die Messtaster 66, 68 abgegebene Signal etwa einer Neutralstellung, also einer Null-Auslenkung oder einer Nahezu-Null-Auslenkung, entspricht.

Bei der Ermittlung des Ist-Abstands 100 können maschinenseitige Einflussfaktoren, etwa der thermische Gang der Werkzeugmaschine 10, grundsätzlich nur über den geringen Verfahrweg 98 auf das Messergebnis einwirken. Das "Übermaß", das etwa der Differenz zwischen dem Basisabstand 86 und dem Referenzabstand 84 entspricht, erlaubt eine Vermessung einer Vielzahl verschiedener Werkstücke 96 mit unterschiedlichen Abmessungen.

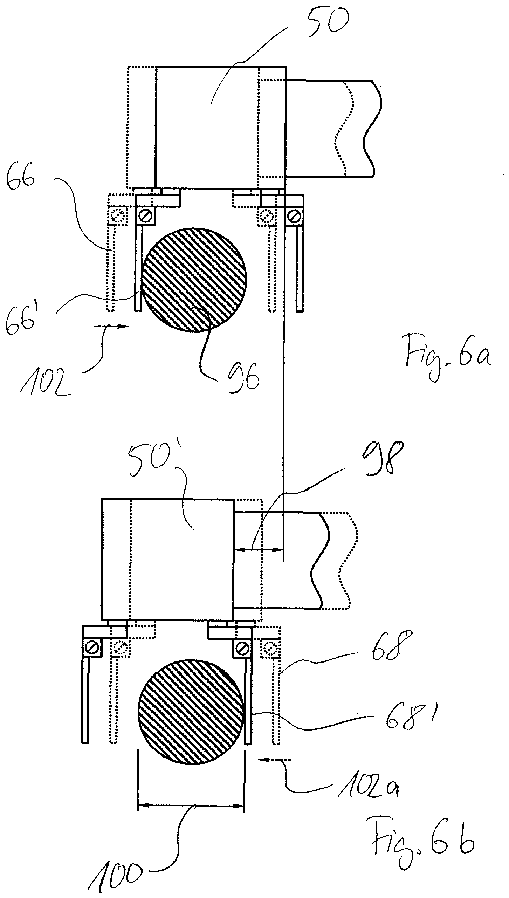

In den Fig. 6a und 6b wird ein den Fig. 5a und 5b grundsätzlich ähnlicher Messablauf erläutert. Das Antasten des Werkstücks 96 erfolgt jedoch mit unterschiedlichen Vorschubgeschwindigkeiten. So kann es etwa von Vorteil sein, den Messtaster 66 zunächst in einem Eilgang bzw. Schnellgang einer Vorposition zuzuführen, in der dieser das Werkstück 96 noch nicht kontaktiert. Zur Vermeidung von Beschädigungen des Messkopfes 50 bzw. des Werkstücks 96 kann, ausgehend von der Vorposition, die weitere Zustellung in einem Tastgang erfolgen, bis der Messtaster 66' das Werkstück 96 antastet.

In gleicher Weise kann das Antasten des Messtasters 68 erfolgen, indem dieser zunächst in einem Schnellgang auf eine Vorposition zugeführt wird. Ausgehend von der Vorposition kann der weitere Vorschub in einem langsamen Tastgang erfolgen, vgl. einen mit 102a bezeichneten Pfeil. Der Messtaster 88' hat das Werkstück 96 angetastet.

Ausgehend vom Verfahrweg 98 und dem bekannten Basisabstand 86 kann der Ist-Abstand des Werkstücks 96 ermittelt werden.

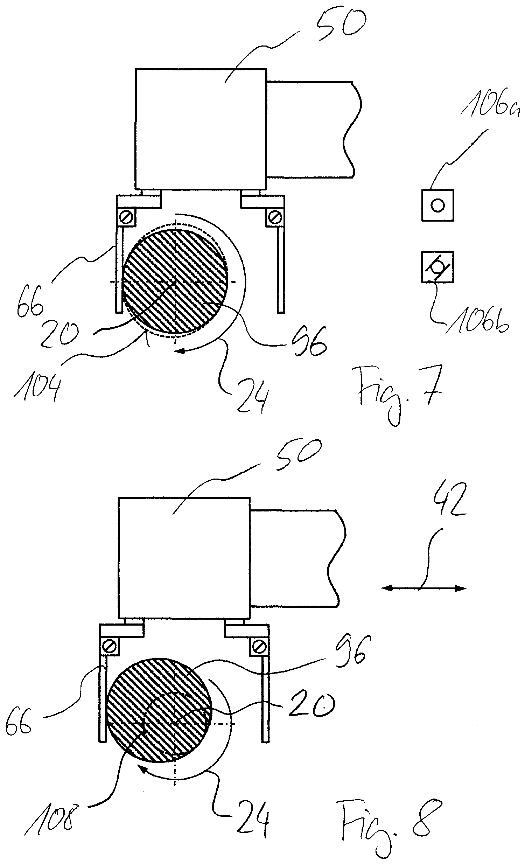

Fig. 7 veranschaulicht, dass der Messkopf 50 weitere Anwendungsmöglichkeiten erlaubt. Das in Fig. 7 zu prüfende Werkstück 96 weist eine mit 104 angedeutete Formabweichung auf. Dabei kann es sich etwa um eine Rundheitsabweichung oder aber eine Zylinderformabweichung handeln, vgl. beispielhaft mit 106a, 106b bezeichnete Toleranzsymbole. Der Messtaster 66 ist auslenkbar und kann somit beim Umlauf des Werkstücks 96 um die Werkstückspindelachse 20 die Formabweichung 104 kontinuierlich oder diskontinuierlich erfassen. In diesem Zusammenhang kann es bevorzugt sein, wenn der Messtaster 66 einen großen Proportionalitätsbereich aufweist, um auch große Abweichungen erfassen zu können.

Zylinderformtoleranzen können etwa dann erfasst werden, wenn die Werkzeugspindel 30, an der die Messeinrichtung 48 aufgenommen ist, beim Umlauf des Werkstücks 96 parallel zur Werkstückspindelachse 20 entlang der Z-Achse verlagert wird. Beispielhaft kann etwa so eine Zylinderfläche entlang einer Spiralbahn abgetastet werden. Auf diese Weise kann das Werkstück 96 "gescannt" werden.

In Fig. 8 ist das Werkstück 96 derart ausgestaltet, dass um einen zentrischen Abschnitt 108 ein exzentrischer Abschnitt um die Werkstückspindelachse 20 umläuft. Derartige zumindest abschnittsweise exzentrisch gestaltete Werkstücke 96 können etwa dann vermessen werden, wenn die Steuereinrichtung 56 dazu ausgestaltet ist, die Werkzeugspindel 30 entlang der X-Achse, also der Zustellachse 70, und gleichzeitig das Werkstück 96 um die sogenannte C-Achse anzutreiben, die vorliegend mit der Werkstückspindelachse 20 zusammenfällt. Beispielhaft kann die gekoppelte Bewegung erwarteten Kontaktstellen des ersten Messtasters 66 auf dem Werkstück 96 bei dessen exzentrischem Umlauf folgen. Auch auf diese Weise können grundsätzlich etwa Rundheitstoleranzen oder Zylinderformtoleranzen erfasst werden. Es ist jedoch auch vorstellbar, exzentrische Werkstücke 96 abschnittsweise anzutreiben und jeweils mit beiden Messtastern 66, 68 analog zu den Fig. 5a, 5b bzw. Fig. 6a, 6b Ist-Abstände, etwa Ist-Durchmesser, zu erfassen.

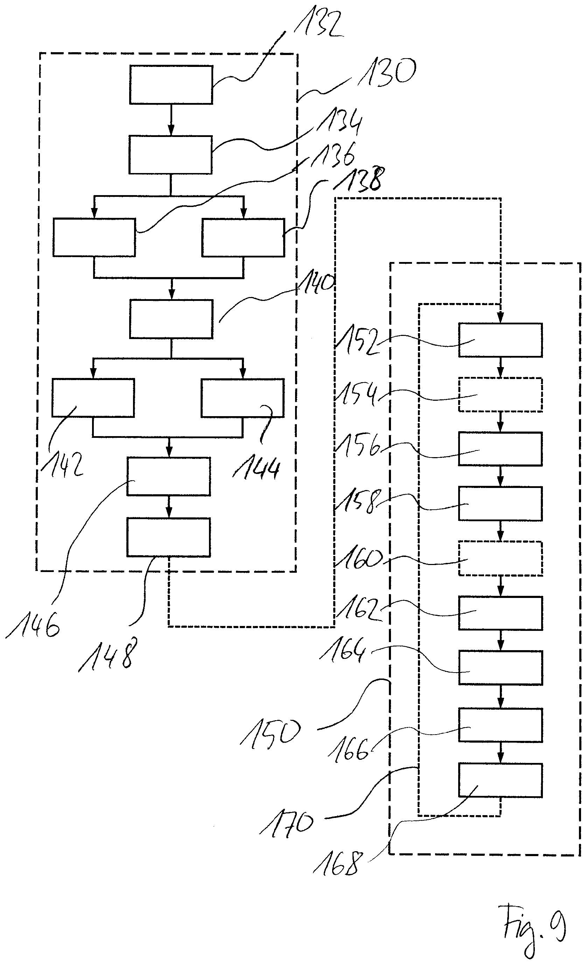

Fig. 9 veranschaulicht verschiedene Schritte eines Verfahrens zur Vermessung von Werkstücken, das etwa mit der Werkzeugmaschine 10 durchgeführt werden kann.

Das Verfahren kann einen initialen Block 130 aufweisen, der etwa ein Eichen bzw. Kalibrieren umfassen kann.

In einem ersten Schritt 132 wird ein Referenzmaß, etwa eines Referenzkörpers, bereitgestellt und in einen Messbereich eingeführt. Das Einführen kann etwa durch ein Verschwenken einer Messeinrichtung erfolgen.

In einem nachgelagerten Schritt 134 kann ein erstes Antasten des Referenzmaßes etwa mit einem ersten Messtaster erfolgen. Das erste Antasten 134 kann etwa durch die Schritte 136, 138 abgeschlossen werden. Der Schritt 136 kann ein elektrisches Eichen eines Messkreises des ersten Messtasters umfassen. Der Schritt 138 kann ein Erfassen einer Ist-Lage entlang einer X-Achse bzw. Zustellachse beinhalten.

Anschließend kann sich ein Schritt 140 anschließen, der ein zweites Antasten mittels eines zweiten Messtasters umfasst. Der Schritt 140 des zweiten Antastens kann die Schritte 142, 144 umfassen, die den Schritt 140 beschließen können. Der Schritt 142 kann das elektrische Eichen eines Messkreises des zweiten Messtasters umfassen. Der Schritt 144 kann das Erfassen einer zweiten Ist-Lage entlang der Zustellachse bzw. der X-Achse beinhalten.

In einem nachgelagerten Schritt 146 kann ausgehend von den erfassten Werten und dem bekannten Referenzmaß ein Basisabstand ermittelt werden, der als Grundlage für weitere Messungen dienen kann. Ein Schritt 148 beschließt das Eichen bzw. Kalibrieren.

Ein mit 150 beschriebener Block beschreibt beispielhaft das Vermessen eines Werkstücks unter Verwendung des zuvor ermittelten Basisabstands.

In einem ersten Schritt 152 wird ein zu vermessendes Werkstück aufgenommen und etwa durch Verschwenken der Messeinrichtung in deren Messbereich eingebracht.

In einem fakultativen Schritt 154 kann eine Vorposition mit einer ersten Zustellgeschwindigkeit angefahren werden. In einem weiteren Schritt 156 kann eine erste Messposition angefahren werden, in der ein erstes Antasten des Werkstücks mit dem ersten Messtaster erfolgt. Das Anfahren kann etwa mit einer zweiten Zustellgeschwindigkeit erfolgen. In einem weiteren Schritt 158 können die mit dem ersten Antasten verknüpften Positionswerte aufgenommen werden.

In einem nachgelagerten fakultativen Schritt 160 kann eine zweite Vorposition mit der ersten Zustellgeschwindigkeit angefahren werden. Ein nachgelagerter Schritt 162 umfasst das Anfahren einer zweiten Messposition, in der der zweite Messtaster das Werkstück 96 kontaktieren kann. Das Anfahren kann etwa mit einer zweiten Zustellgeschwindigkeit erfolgen. In einem weiteren Schritt 164 werden die mit dem zweiten Antasten verknüpften Positionswerte aufgenommen.

Dem ersten und dem zweiten Antasten schließt sich ein Schritt 166 an, in dem ausgehend von den gewonnenen Daten und dem Basisabstand ein Ist-Abstand ermittelt wird. Der Messvorgang wird durch einen Schritt 168 beschlossen, der etwa auch ein Ausschwenken der Messeinrichtung umfassen kann.

Ein Pfeil 170 deutet an, dass nach einmaligem Eichen eine Mehrzahl von Messungen durchgeführt werden kann. Dabei können verschiedene Ist-Abstände ermittelt werden, sofern sie in den Messbereich eingebracht werden können.

Die beschriebenen Verfahrensschritte können etwa Gegenstand eines Maschinensteuerungsprogramms sein.

## Patentansprüche

1. Werkzeugmaschine, insbesondere Schleifmaschine, die Folgendes aufweist:
- eine Werkstückaufnahme (14) mit zumindest einem Werkstückhalter (16, 18) zur Aufnahme eines Werkstücks (96),
- eine Werkzeugeinheit (28) mit einer Werkzeugspindel (30), insbesondere mit einem Schleifkopf, zur Aufnahme und zum Antrieb eines Werkzeugs (32), insbesondere zumindest einer Schleifscheibe, wobei die Werkzeugeinheit (28) entlang einer Zustellachse (70) in Richtung auf das Werkstück (96) verfahrbar ist,
- eine Messeinrichtung (48), die an der Werkzeugeinheit (28) aufgenommen ist, wobei die Messeinrichtung (48) zwei Messtaster (66, 68) aufweist, und
- eine Steuereinrichtung (56), die mit der Messeinrichtung (48) und der Werkzeugeinheit (28) koppelbar ist, wobei die Steuereinrichtung (56) dazu ausgebildet ist, an den zwei Messtastern (66, 68) detektierte Werte zu erfassen, und eine Ist-Lage der Werkzeugeinheit (28) entlang der Zustellachse (70) zu erfassen, wobei
- die zwei Messtaster (66, 68) in einer Messkonfiguration einen Basisabstand (86) voneinander aufweisen, der einen Messbereich (78) definiert, wobei der Basisabstand (86) größer als ein bekanntes Referenzmaß (84) gewählt ist, und dass
- die Steuereinrichtung (56) dazu ausgebildet ist, auf Basis eines Verfahrweges (98) der Werkzeugeinheit (28) beim wechselseitigen Antasten eines Werkstücks (96), das in den Messbereich (78) eingebracht ist, mit den zwei Messtastern (66, 68) unter Berücksichtigung des Basisabstands (86) einen Ist-Abstand (100) des Werkstücks (96), insbesondere einen Ist-Durchmesser, zu ermitteln,
**dadurch gekennzeichnet, dass**
das wechselseitige Antasten zunächst ein Antasten des Werkstücks (96) mit einem ersten Messtaster (66) der zwei Messtaster (66, 68), der durch eine Bewegung der Werkzeugeinheit (28), an der die Messeinrichtung (48) aufgenommen ist, entlang der Zustellachse (70) verfahren wird, bis eine Messung erfolgen kann, und anschließend ein Antasten einer gegenüberliegenden Seite des Werkstücks (96) mit dem zweiten Messtaster (68), indem die Werkzeugeinheit (28) entsprechend entlang der Zustellachse (70) verfahren wird, umfasst.

2. Werkzeugmaschine (10) nach Anspruch 1, wobei die Messeinrichtung (48) einen Messkopf (50) aufweist, an dem die zwei Messtaster (66, 68) aufgenommen sind, und wobei der Messkopf (50) verschwenkbar ist, um das Werkstück (96) in den Messbereich (78) einzubringen.

3. Werkzeugmaschine (10) nach Anspruch 1 oder 2, wobei die Messeinrichtung (48) einen Koppelgetriebemechanismus (64) aufweist, der ein Verschwenken zwischen einer Messstellung und einer Außer-Eingriff-Stellung erlaubt.

4. Werkzeugmaschine (10) nach einem der vorhergehenden Ansprüche, wobei der Basisabstand (86) und der Ist-Abstand (100) ein Verhältnis von ungefähr maximal 2:1, vorzugsweise maximal 1,5:1, weiter bevorzugt maximal 1,2:1, noch weiter bevorzugt maximal 1,1:1 aufweisen.

5. Werkzeugmaschine (10) nach einem der vorhergehenden Ansprüche, wobei zumindest ein Messtaster (66; 68) der zwei Messtaster (66, 68) in einem Proportionalitätsbereich auslenkbar ist, und wobei die Steuereinrichtung (56) dazu ausgebildet ist, die Auslenkung des zumindest einen Messtasters (66; 68) zu erfassen.

6. Werkzeugmaschine (10) nach einem der vorhergehenden Ansprüche, wobei das Werkstück (96) an einer Werkstückspindel (16) aufnehmbar ist, die selektiv um eine Werkstückspindelachse (20) rotatorisch antreibbar ist, wobei die Werkstückspindelachse (20) vorzugsweise senkrecht zur Zustellachse (70) angeordnet ist, und wobei die Werkzeugspindel (30) vorzugsweise eine Werkzeugspindelachse (34) aufweist, die parallel zur Werkstückspindelachse (20) angeordnet ist.

7. Werkzeugmaschine (10) nach Anspruch 6, wobei die Werkzeugeinheit (28) parallel zur Werkstückspindelachse (20) relativ zum Werkstück (96) verfahrbar ist.

8. Werkzeugmaschine (10) nach Anspruch 6 oder 7, wobei die Steuereinrichtung (56) dazu ausgebildet ist, bei einer gekoppelten Bewegung die Werkzeugeinheit (28) selektiv entlang der Zustellachse (70) zu verfahren und die Werkstückspindel (16) selektiv um die Werkstückspindelachse (20) anzutreiben.

9. Werkzeugmaschine (10) nach einem der Ansprüche 7 oder 8, wobei die Steuereinrichtung (56) dazu ausgebildet ist, bei einer gekoppelten Bewegung ferner die Werkzeugeinheit (28) selektiv parallel zur Werkstückspindelachse (20) zu verfahren.

10. Werkzeugmaschine (10) nach einem der vorhergehenden Ansprüche, wobei die Steuereinrichtung (56) dazu ausgebildet ist, die Werkzeugeinheit (28) mit der Messeinrichtung (48) selektiv in einem Schnellgang oder einem Tastgang zu verfahren.

11. Werkzeugmaschine (10) nach einen der vorhergehenden Ansprüche, wobei die Steuereinrichtung (56) dazu ausgebildet ist, anhand des Ist-Abstands (100) des Werkstücks (96), insbesondere des Ist-Durchmessers, die Werkzeugeinheit (28) und das Werkzeug (32) in einem nachgelagerten Bearbeitungsgang selektiv anzutreiben und zu verlagern.

12. Werkzeugmaschine (10) nach einem der vorhergehenden Ansprüche, wobei die Steuereinrichtung (56) mit einem Positionsgeber (92) der Werkzeugeinheit (28) gekoppelt ist, an dem die Ist-Lage der Werkzeugeinheit (28) erfasst werden kann.

13. Verfahren zur Vermessung eines Werkstücks, insbesondere eines Werkstückdurchmessers, in einer Werkzeugmaschine (10), insbesondere einer Schleifmaschine, mit den folgenden Schritten:
- Bereitstellen einer Messeinrichtung (48), die entlang einer Zustellachse (70) relativ zu einem Werkstück (96) verfahrbar ist, wobei die Messeinrichtung (48) an einer Werkzeugeinheit (28) aufgenommen ist, wobei die Messeinrichtung (48) zwei Messtaster (66, 68) aufweist,
- Einstellen eines Basisabstands (86) zwischen den zwei Messtastern (66, 68), der größer als ein bekanntes Referenzmaß (84) einer Referenzgeometrie (82) gewählt ist und einen Messbereich (78) definiert,
- Aufnahme der Referenzgeometrie (82) in der Werkzeugmaschine (10),
- Einbringen des Referenzmaßes (84) in den Messbereich (78),
- Verfahren der Messeinrichtung (48) relativ zur Referenzgeometrie (82) und wechselseitiges Antasten des Referenzmaßes (84) mit den Messtastern (66, 68), dabei Erfassung der Ist-Lagen der Messeinrichtung (48), somit Erfassung des Verfahrweges (98) der Messeinrichtung (48),
- Ermitteln des Basisabstands (86) unter Berücksichtigung des Referenzmaßes (84) und der Ist-Lagen der Messeinrichtung (48) beim Antasten, und
- Aufnahme eines Werkstücks (96) in der Werkzeugmaschine (10), Einbringen einer Messgeometrie des Werkstücks (96) in den Messbereich (78), **gekennzeichnet durch** ein
- wechselseitiges Antasten der Messgeometrie des Werkstücks (96) mit den Messtastern (66, 68), dabei Erfassung des Verfahrweges der Messeinrichtung (48), wobei das wechselseitige Antasten zunächst ein Antasten des Werkstücks (96) mit einem ersten Messtaster (66) der zwei Messtaster (66, 68), der durch eine Bewegung der Werkzeugeinheit (28), an der die Messeinrichtung (48) aufgenommen ist, entlang der Zustellachse (70) verfahren wird, bis eine Messung erfolgen kann, und anschließend ein Antasten einer gegenüberliegenden Seite des Werkstücks (96) mit dem zweiten Messtaster (68), indem die Werkzeugeinheit (28) entsprechend entlang der Zustellachse (70) verfahren wird, umfasst, und
- Ermitteln eines Ist-Abstands (100) der Messgeometrie unter Berücksichtigung des Basisabstands (86) und des Verfahrweges der Messeinrichtung (48) beim Antasten.

14. Maschinensteuerungsprogramm, das Programmcode aufweist, der dazu ausgebildet ist, eine Steuereinrichtung (56) einer Werkzeugmaschine (10) gemäß einem der Ansprüche 1 bis 12 zu veranlassen, die Schritte des Verfahrens nach Anspruch 13 auszuführen, wenn das Maschinensteuerungsprogramm auf der Steuereinrichtung (56) ausgeführt wird.

## Claims

1. A machine tool, in particular a grinding machine, comprising:
- a workpiece mount (14) comprising at least one workpiece holder (16, 18) for accommodating a workpiece (96),
- a tool unit (28) comprising a tool spindle (30), particularly comprising a grinding head, for accommodating and for driving a tool (32), in particular at least one grinding wheel, wherein the tool unit (28) is movable along a feed axis (70) towards the workpiece (96),
- a measuring device (48) which is accommodated at the tool unit (28), wherein the measuring device (48) comprises two measuring probes (66, 68), and
- a control device (56), which is connectable to the measuring device (48) and the tool unit (28), wherein the control device (56) is configured for acquiring values detected by the two measuring probes (66, 68), and for detecting an actual position of the tool unit (28) along the feed axis (70), wherein
- the two measuring probes (66, 68) are spaced apart in a measuring configuration by a basic spacing (86) defining a measurement region (78), wherein the basic spacing (86) is selected to be greater than a known reference dimension (84), and
- the control device (56) is configured for determining an actual spacing (100) of the workpiece (96), in particular an actual diameter, on the basis of a displacement path (98) of the tool unit (28) when mutually probing a workpiece (96) that is moved into the measurement region (78), with the two measuring probes (66, 68) under consideration of the reference dimension (84) and/or the basic spacing (86),
**characterized in that**
the mutual probing comprises an initial probing of the workpiece (96) with a first measuring probe (66) of the two measuring probes (66, 68), which is moved by means of a movement of the tool unit (28), on which the measuring device (48) is accommodated, along the feed axis (70) until a measurement can be effected and then a probing of an opposite side of the workpiece (96) with the second measuring probe (68) by the tool unit (28) being moved correspondingly along the feed axis (70).

2. The machine tool (10) as claimed in claim 1, wherein the measuring device (48) comprises a measuring head (50), on which the two measuring probes (66, 68) are accommodated, and wherein the measuring head (50) is pivotable in order to move the workpiece (96) into the measurement region (78).

3. The machine tool (10) as claimed in claim 1 or 2, wherein the measuring device (48) comprises a coupling linkage mechanism (64) which allows pivoting between a measurement position and an out-of-engagement position.

4. The machine tool (10) as claimed in any of the preceding claims, wherein the basic spacing (86) and the actual spacing (100) are at a ratio of about a maximum of 2:1, preferably a maximum of 1.5:1, further preferred a maximum of 1.2:1 and even further preferred a maximum of 1.1:1.

5. The machine tool (10) as claimed in any of the preceding claims, wherein at least one measuring probe (66; 68) of the two measuring probes (66, 68) is deflectable in a proportionality region, and wherein the control device (56) is configured for detecting the deflection of the at least one measuring probe (66; 68).

6. The machine tool (10) as claimed in any of the preceding claims, wherein the workpiece (96) is mountable on a workpiece spindle (16) which is rotationally driveable in a selective manner about a workpiece spindle axis (20), wherein the workpiece spindle axis (20) is preferably arranged perpendicular with respect to the feed axis (70), and wherein the tool spindle (30) preferably comprises a tool spindle axis (34) which is arranged parallel to the workpiece spindle axis (20).

7. The machine tool (10) as claimed in claim 6, wherein the tool unit (28) is movable in relation to the workpiece (96) parallel to the workpiece spindle axis (20).

8. The machine tool (10) as claimed in claim 6 or 7, wherein the control device (56) is configured for moving the tool unit (28) in a selective manner along the feed axis (70) with a coupled movement and of driving the workpiece spindle (16) in a selective manner about the workpiece spindle axis (20).

9. The machine tool (10) as claimed in one of claims 7 or 8, wherein the control device (56) is further configured for selectively moving the tool unit (28) parallel to the workpiece spindle axis (20) with a coupled movement.

10. The machine tool (10) as claimed in any of the preceding claims, wherein the control device (56) is configured for selectively moving the tool unit (28) with the measuring device (48) with a rapid motion or a probing motion.

11. The machine tool (10) as claimed in any of the preceding claims, wherein the control device (56) is configured for selectively driving and displacing the tool unit (28) and the tool (32) under consideration of the actual spacing (100) of the workpiece (96), in particular the actual diameter, in a subsequent machining process.

12. The machine tool (10) as claimed in any of the preceding claims, wherein the control device (56) is coupled with a position transducer (92) of the tool unit (28), by means of which the actual position of the tool unit (28) can be detected.

13. A method for measuring a workpiece, in particular a workpiece diameter, in a machine tool (10), in particular a grinding machine, the method comprising the following steps:
- providing a measuring device (48) which is movable in relation to a workpiece (96) along a feed axis (70), wherein the measuring device (48) is accommodated on a tool unit (28), wherein the measuring device (48) comprises two measuring probes (66, 68),
- adjusting a basic spacing (86) between the two measuring probes (66, 68) which is selected to be greater than a known reference dimension (84) of a reference geometry (82), and wherein the basic spacing (86) defines a measurement region (78),
- accommodating the reference geometry (82) in the machine tool (10),
- inserting the reference dimension (84) into the measurement region (78),
- moving the measuring device (48) in relation to the reference geometry (82) and mutually probing the reference dimension (84) with the measuring probes (66, 68), thereby detecting the actual positions of the measuring device (48) and, as a result, detecting the displacement path (98) of the measuring device (48),
- determining the basic spacing (86) under consideration of the reference dimension (84) and of the actual positions of the measuring device (48) when probing, and
- accommodating a workpiece (96) in the machine tool (10), inserting a measurement geometry of the workpiece (96) into the measurement region (78),
**characterized by**
- mutually probing the measurement geometry of the workpiece (96) with the measuring probes (66, 68), thereby detecting the displacement path of the measuring device (48), wherein the mutual probing comprises an initial probing of the workpiece (96) with a first measuring probe (66) of the two measuring probes (66, 68), which is moved by means of a movement of the tool unit (28), on which the measuring device (48) is accommodated, along the feed axis (70) until a measurement can be effected, and then a probing of an opposite side of the workpiece (96) with the second measuring probe (68) by the tool unit (28) being moved correspondingly along the feed axis (70), and
- determining an actual spacing (100) of the measurement geometry under consideration of the basic spacing (86) and of the displacement path of the measuring device (48) when probing.

14. A tool control program comprising program code which is configured for causing a control device (56) of a machine tool (10) as claimed in any one of claims 1 to 12 to carry out the steps of the method as claimed in claim 13 when the tool control program is executed on the control device (56).

## Revendications

1. Machine-outil, en particulier meuleuse, présentant :
- un logement de pièce (14) comprenant au moins un porte-pièce (16, 18) pour recevoir une pièce (96),
- une unité d'outil (28) avec une broche d'outil (30), en particulier avec une tête de meulage, pour recevoir et entraîner un outil (32), en particulier au moins un disque abrasif, l'unité d'outil (28) pouvant être déplacée le long d'un axe d'avance (70) dans la direction de la pièce (96),
- un dispositif de mesure (48) qui est reçu sur l'unité d'outil (28), le dispositif de mesure (48) présentant deux capteurs de mesure (66, 68), et
- un dispositif de commande (56) qui peut être accouplé au dispositif de mesure (48) et à l'unité d'outil (28), le dispositif de commande (56) étant réalisé pour détecter des valeurs détectées au niveau des deux capteurs de mesure (66, 68), et pour détecter une position actuelle de l'unité d'outil (28) le long de l'axe d'avance (70),
dans laquelle
- les deux capteurs de mesure (66, 68), dans une configuration de mesure, présentent entre eux une distance de base (86) qui définit une région de mesure (78), la distance de base (86) étant choisie pour être supérieure à une mesure de référence connue (84), et
- le dispositif de commande (56) est réalisé pour déterminer, sur la base d'une course de déplacement (98) de l'unité d'outil (28) lors d'un contact mutuel d'une pièce (96) qui est introduite dans la région de mesure (78) avec les deux capteurs de mesure (66, 68), en tenant compte de la distance de base (86), une distance actuelle (100) de la pièce (96), en particulier un diamètre actuel,
**caractérisée en ce que**
le contact mutuel comprend tout d'abord un contact de la pièce (96) avec un premier capteur de mesure (66) parmi les deux capteurs de mesure (66, 68), lequel est déplacé le long de l'axe d'avance (70) par un déplacement de l'unité d'outil (28) au niveau de laquelle est reçu le dispositif de mesure (48), jusqu'à ce qu'une mesure puisse avoir lieu, et ensuite un contact d'un côté opposé de la pièce (96) avec le deuxième capteur de mesure (68) en déplaçant l'unité d'outil (28) de manière correspondante le long de l'axe d'avance (70).

2. Machine-outil (10) selon la revendication 1, dans laquelle le dispositif de mesure (48) présente une tête de mesure (50) au niveau de laquelle sont reçus les deux capteurs de mesure (66, 68), et dans laquelle la tête de mesure (50) peut pivoter afin d'amener la pièce (96) dans la région de mesure (78).

3. Machine-outil (10) selon la revendication 1 ou 2, dans laquelle le dispositif de mesure (48) présente un mécanisme à engrenage de couplage (64) qui permet un pivotement entre une position de mesure et une position désengagée.

4. Machine-outil (10) selon l'une quelconque des revendications précédentes, dans laquelle la distance de base (86) et la distance actuelle (100) présentent un rapport maximum d'environ 2:1, de préférence un rapport maximum de 1,5:1, plus préférablement un rapport maximum de 1,2:1, encore plus préférablement un rapport maximum de 1,1:1.

5. Machine-outil (10) selon l'une quelconque des revendications précédentes, dans laquelle au moins un capteur de mesure (66 ; 68) parmi les deux capteurs de mesure (66, 68) peut être dévié dans une région de proportionnalité et dans laquelle le dispositif de commande (56) est réalisé de manière à détecter la déviation de l'au moins un capteur de mesure (66 ; 68).

6. Machine-outil (10) selon l'une quelconque des revendications précédentes, dans laquelle la pièce (96) peut être reçue sur une broche de pièce (16) qui peut être entraînée en rotation de manière sélective autour d'un axe de broche de pièce (20), l'axe de broche de pièce (20) étant de préférence disposé perpendiculairement à l'axe d'avance (70) et la broche d'outil (30) présentant de préférence un axe de broche d'outil (34) qui est disposé parallèlement à l'axe de broche de pièce (20).

7. Machine-outil (10) selon la revendication 6, dans laquelle l'unité d'outil (28) peut être déplacée par rapport à la pièce (96) parallèlement à l'axe de broche de pièce (20).

8. Machine-outil (10) selon la revendication 6 ou 7, dans laquelle le dispositif de commande (56) est réalisé, lors d'un déplacement couplé, pour déplacer l'unité d'outil (28) de manière sélective le long de l'axe d'avance (70) et pour entraîner la broche de pièce (16) de manière sélective autour de l'axe de broche de pièce (20).

9. Machine-outil (10) selon l'une quelconque des revendications 7 et 8, dans laquelle le dispositif de commande (56) est réalisé, lors d'un déplacement couplé, pour déplacer en outre l'unité d'outil (28) de manière sélective parallèlement à l'axe de broche de pièce (20).

10. Machine-outil (10) selon l'une quelconque des revendications précédentes, dans laquelle le dispositif de commande (56) est réalisé pour déplacer l'unité d'outil (28) avec le dispositif de mesure (48) de manière sélective à vitesse rapide ou à vitesse cadencée.

11. Machine-outil (10) selon l'une quelconque des revendications précédentes, dans laquelle le dispositif de commande (56) est réalisé pour entraîner et déplacer de manière sélective, à l'aide de la distance actuelle (100) de la pièce (96), en particulier du diamètre actuel, l'unité d'outil (28) et l'outil (32) avec une vitesse de traitement en aval.

12. Machine-outil (10) selon l'une quelconque des revendications précédentes, dans laquelle le dispositif de commande (56) est accouplé à un capteur de position (92) de l'unité d'outil (28), au niveau duquel la position actuelle de l'unité d'outil (28) peut être détectée.

13. Procédé de mesure d'une pièce, en particulier d'un diamètre d'une pièce, dans une machine-outil (10), en particulier une meuleuse, comprenant les étapes suivantes :
- fourniture d'un dispositif de mesure (48) qui peut être déplacé le long d'un axe d'avance (70) par rapport à une pièce (96), le dispositif de mesure (48) étant reçu au niveau d'une unité d'outil (28), le dispositif de mesure (48) présentant deux capteurs de mesure (66, 68),
- ajustement d'une distance de base (86) entre les deux capteurs de mesure (66, 68), laquelle est choisie de manière à être supérieure à une mesure de référence connue (84) d'une géométrie de référence (82) et définit une région de mesure (78),
- réception de la géométrie de référence (82) dans la machine-outil (10),
- introduction de la mesure de référence (84) dans la région de mesure (78),
- déplacement du dispositif de mesure (48) par rapport à la géométrie de référence (82) et contact mutuel de la mesure de référence (84) avec les capteurs de mesure (66, 68), avec détection des positions actuelles du dispositif de mesure (48), et ainsi détection de la course de déplacement (98) du dispositif de mesure (48),
- détermination de la distance de base (86) en tenant compte de la mesure de référence (84) et des positions actuelles du dispositif de mesure (48) lors du contact, et
- réception d'une pièce (96) dans la machine-outil (10), introduction d'une géométrie de mesure de la pièce (96) dans la région de mesure (78),
**caractérisé par**
- un contact mutuel de la géométrie de mesure de la pièce (96) avec les capteurs de mesure (66, 68), avec détection de la course de déplacement du dispositif de mesure (48), le contact mutuel comprenant tout d'abord un contact de la pièce (96) avec un premier capteur de mesure (66) parmi les deux capteurs de mesure (66, 68), lequel est déplacé le long de l'axe d'avance (70) par un déplacement de l'unité d'outil (28) au niveau de laquelle est reçu le dispositif de mesure (48), jusqu'à ce qu'une mesure puisse avoir lieu, et ensuite un contact d'un côté opposé de la pièce (96) avec le deuxième capteur de mesure (68) en déplaçant l'unité d'outil (28) de manière correspondante le long de l'axe d'avance (70), et
- détermination d'une distance actuelle (100) de la géométrie de mesure en tenant compte de la distance de base (86) et de la course de déplacement du dispositif de mesure (48) lors du contact.

14. Programme de commande de machine qui présente un code de programme qui est réalisé pour permettre à un dispositif de commande (56) d'une machine-outil (10) selon l'une quelconque des revendications 1 à 12 de mettre en oeuvre les étapes du procédé selon la revendication 13, lorsque le programme de commande de machine est exécuté sur le dispositif de commande (56).
